# EUROPEAN PATENT APPLICATION

(11) **EP 1 426 922 A2**
(43) Date of publication of application: **09.06.2004**
(21) Application number: 03027705.7
(22) Date of filing: 02.12.2003
(51) Int. Cl.: G10L 13/04

(54) **Audio confirmation system and method**

(30) Priority: 02.12.2002 US 308823
(71) Applicant: Polycom, Inc., Milpitas, CA 95035 (US)
(72) Inventor: Nimri, Alain, Austin Texas 78750 (US); Castles, Randy, Austin Texas 78726 (US)
(74) Representative: Käck, Jürgen, Dipl.-Ing.

(57) **Abstract**

An audio confirmation system and method are provided. A signal including data input by a user is received. The data is extracted from the signal and an audio file corresponding to the data is identified. An audio signal associated with the audio file is output to the user.

## Description

### BACKGROUND OF THE INVENTION

### Field of the Invention

The present invention relates generally to the field of videoconferencing devices, and more particularly to an audio confirmation system and method.

### Background of the invention

Videoconferencing systems are widely used in order to facilitate communication between offices in varying locations. In order to connect with a remote location with which a user is attempting to hold a videoconference, a number (i.e., numerical data) reflecting an IP address and/or telephone number of the remote location is entered utilizing a videoconference device. The user can enter this numerical data utilizing a data entry device such as a remote control device associated with the videoconference device, utilizing a keyboard associated with the videoconference device, etc. The numerical data entered by the user is displayed on a display medium of some sort, such as a computer monitor, a television monitor, etc. Displaying this numerical data allows the user to confirm the correctness of the data entered. However, often the display of the numerical data is difficult to see, either because of size or because the user is too far away from the display to clearly view the numerical data.

Further, numerical data or other data may be entered during the course of the videoconference. The same issue arises with respect to difficulty in confirming the correctness of the data entered due to potential visual obstacles. In addition, the user is required to constantly switch from looking down at the data entry device to looking towards the display medium. This switching between the data entry device and the display medium can strain the vision of the user, since entering data via the data entry device requires near vision, while viewing the display medium to check for accuracy of the entry of the data requires distant vision.

Moreover, some data entry devices fail to provide guaranteed transmission and delivery of data entered utilizing the data entry device, as is often the case when wireless line-of-site devices are used for data entry. For instance, infra-red transmission may not provide guaranteed transmission and delivery of key events. Accordingly, a system and method for providing audio confirmation of data entered by a user is needed.

### SUMMARY OF THE INVENTION

The present invention is defined in claims 1, 9, 22, 23 and 24, respectively. Particular embodiments of the invention are set out in the dependent claims. The present invention provides in various embodiments an audio confirmation system and method. In one method according to the present invention, a signal including data input by a user is received. The data is extracted from the data signal and an audio file corresponding to the data is identified. Subsequently, an audio signal associated with the audio file is output to the user.

In an exemplary system according to the present invention, data is received from a data entry device, and the data entry device transmits a signal including the data to a host device. The host device receives the signal and an audio confirmation engine associated with the host device extracts the data from the data signal. Next, an audio file identification unit identifies an audio file corresponding to the data. Finally, an audio output unit generates an audio signal utilizing the audio file and outputs the audio signal.

A further understanding of the nature and advantages of the inventions herein may be realized by reference to the remaining portions of the specification and attached drawings.

### BRIEF DESCRIPTION OF THE DRAWINGS

FIG. 1 is an exemplary host device in accordance with the present invention;

FIG. 2 is a schematic diagram of a data entry device in communication with a host device in accordance with one embodiment of the present invention is shown;

FIG. 3 is an exemplary audio confirmation engine architecture;

FIG. 4 is an exemplary architecture of an audio file identification unit;

FIG. 5 is an exemplary architecture for creating an audio file; and

FIG. 6 is a flowchart of a process for providing audio confirmation of data entered by a user in accordance with an embodiment of the present invention.

### DESCRIPTION OF THE EXEMPLARY EMBODIMENTS

As shown in the exemplary drawings wherein like reference numerals indicate like or corresponding elements among the figures, an exemplary embodiment of a system according to the present invention will now be described in detail. The following description sets forth an example of an audio confirmation system and method.

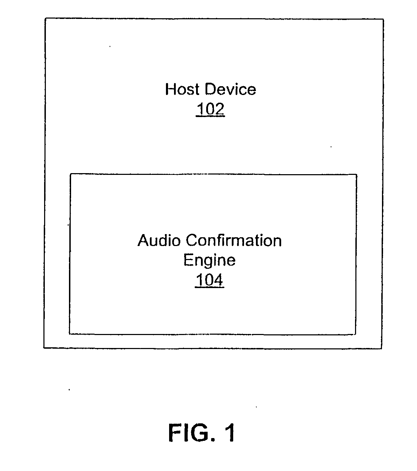

Referring now to FIG. 1, an exemplary host device 102 that may be used with the present invention is shown. The host device 102 of the present invention includes an audio confirmation engine 104. The host device 102 accepts input and confirms the input via audio utilizing the audio confirmation engine 104. Other devices and/or engines may be associated with the host device 102 in accordance with the present invention.

In one embodiment of the present invention, the host device 102 is a local videoconference device. The local videoconference device may communicate with a remote videoconference device via a network. A user of the local videoconference device frequently enters data prior to or during a videoconference. In order to prevent the user from switching focus from inputting data to a display associated with the local videoconference device, the audio confirmation engine 104 associated with the host device 102 outputs an audio signal corresponding to the data input by the user. In other words, the audio confirmation engine 104 generates audio that confirms data entered by the user.

In another embodiment, the host device 102 is a television. Similarly, the television outputs an audio signal that confirms the data input by the user. Although the videoconference device and the television have been offered as examples of host devices 102, any suitable host device may be employed according to the present invention. For instance, the host device 102 may include a VCR, a DVD ROM, cable boxes, video games, etc. Typically, the host device 102 includes any device that employs a remote data entry device, such as a remote control. However, the data entry need not be accomplished remotely. For instance, a cellular telephone may act as both the host device 102 and be utilized for data entry.

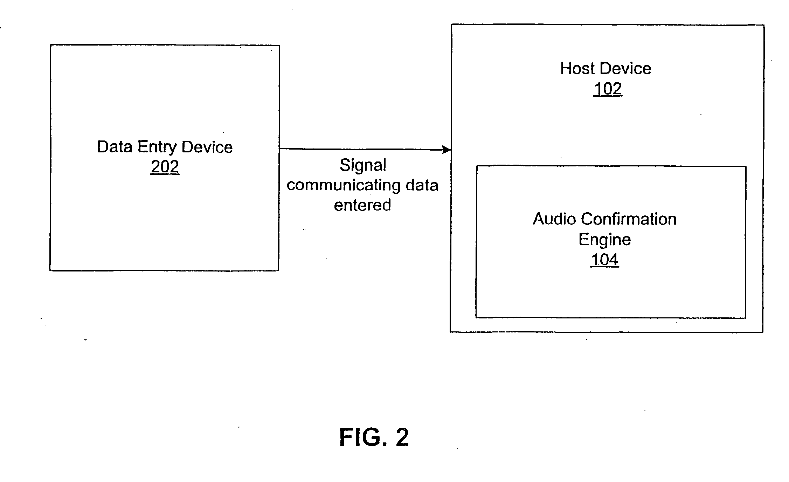

Referring now to FIG. 2, a schematic diagram of a data entry device 202 in communication with the host device 102 in accordance with one embodiment of the present invention is shown. The data entry device 202, typically, sends data directly to the host device 102. Initially, a user enters data utilizing the data entry device 202, which in turn generates a data signal for communicating the data to the host device 102. The data entry device 202 then may communicate the data signal to the host device 102 in any manner consistent with invention, such as via an infrared signal, radio frequency signal, etc.

The user may enter data into the data entry device 202 utilizing keys, buttons, etc. associated with the data entry device 202. The data entry device 202 may communicate with the host device 102 via wireless communication. Wireless data entry devices 202 may include remote controls, personal digital assistants (PDAs), cellular telephones, such as a blue-tooth enabled cellular telephone, and so on.

Alternatively, the data entry device 202 may communicate with the host device 102 via a wired connection. For instance, a wired data entry device 202 may include a wired touch pad controller, a keyboard, etc. As discussed herein, the host device 102 may include buttons, keys, etc. for directly inputting data, such as in the case of a cellular telephone that provides audio confirmation of the buttons selected, in accordance with the present invention.

The data entry device 202 initially receives input from the user. The data entry device 202 typically includes keys for allowing the user to input data, as discussed herein. However, any type of mechanism may be provided for allowing the user to input data via the data entry device 202. The data entry device 202 configures the data input by the user for transmission to the host device 102 utilizing a signal, such as an infrared signal, as discussed herein. The signal includes a code representation of the button(s) pressed by the user.

The data entry device 202 configures the data and the data signal for transmission utilizing a transmission protocol corresponding to the type of transmission being employed. For instance, if the data input by the user is being transmitted via an infrared signal, a standard infrared transmission protocol is utilized. However, any configuration process and transmission protocol is within the scope of the present invention.

The data input by the user may include numerical data, words, symbols, etc. In one embodiment, the data entry device 202 includes keys with predefined words or phrases, such as "enter." Thus, the data input by the user may vary in complexity depending upon the complexity of the data entry device 202.

The host device 102 receives the data signal from the data entry device 202. Then the data is processed in order to be displayed and/or played for the user. The playing of the data back to the user is referred to as audio confirmation since it confirms, via audio playback, the data input by the user. The data can be played back via the audio confirmation engine 104 in various languages. The user typically pre-selects the language in which the audio will be played via a selection mechanism associated with the host device 102.

For instance, the user may select English for playback of the audio confirmation. When the user hits the "1" button followed by the "enter" button, for example, "1" "enter" is acoustically played back in the English language to the user, thereby confirming the buttons selected by the user. As discussed herein, the audio confirmation may only confirm the numerical data entered. For instance, in the above example, the number "1" may be confirmed via acoustical playback, while the "enter" phrase is not confirmed via audio confirmation. However, preset phrases, letters of the alphabet, etc. associated with the data entry device 202 may also be played back acoustically along with the numerical data and/or separate from the numerical data.

Generally, the host device 102 includes a display medium. Any type of display medium associated with the host device 102 and/or the data entry device 202 is within the scope of the present invention. Alternatively, the host device 102 and/or the data entry device 202 may not include a display medium.

In one embodiment, the host device 102 includes a switch, button, etc. for activating or deactivating the audio confirmation feature. The user can set the audio confirmation to automatically be activated or deactivated depending upon a default chosen by the user. In other words, depending upon which default is selected by the user, the audio confirmation feature can be activated or deactivated by engaging the switch. Alternatively, the switch may be associated with the data entry device 202.

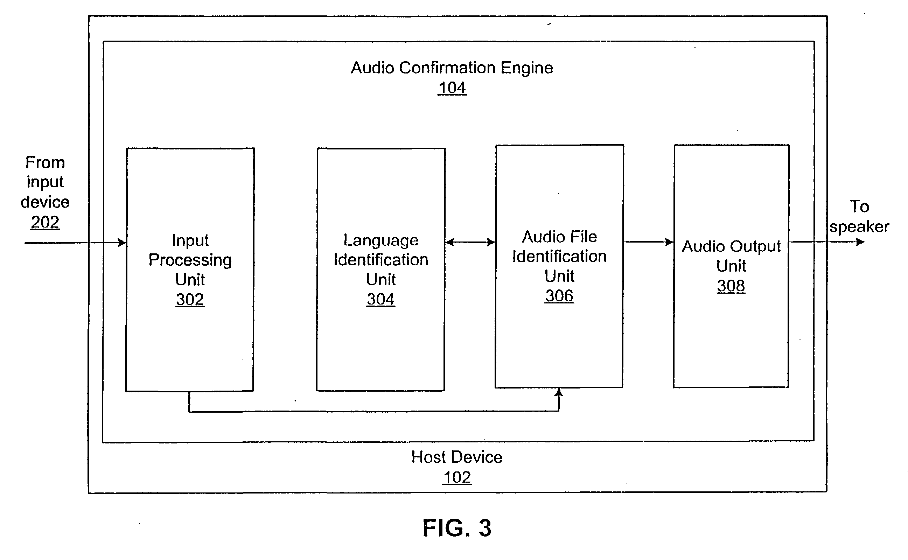

Referring now to FIG. 3, an exemplary audio confirmation engine 104 architecture is shown. In one embodiment, the audio confirmation engine 104 comprises an input processing unit 302, a language identification unit 304, an audio file identification unit 306, and an audio output unit 308. The input processing unit 302 receives the signal communicating the data input by the user via the data entry device 202. The data input by the user is then extracted from the data signal by the input processing unit 302, which decodes the code representation of the button(s) selected by the user to reveal the data associated with the particular button(s).

Once the data input by the user has been decoded and identified by the input processing unit 302, the data is forwarded to the audio file identification unit 306. The audio file identification unit 306 accesses the language identification unit 304 in order to identify a language associated with the data. The language category is provided to the audio file identification unit 306 by the language identification unit 304 and the audio file identification unit 306 forwards audio information to the audio output unit 308. Subsequently, the audio output unit 308 creates an audio signal from the audio information for output. The audio signal generated by the audio output engine 308 is based on the data entered by the user and the language category identified by the language identification unit 304.

A variety of language categories exist. For instance, data input in English, Spanish, French, German, and so on may be represented individually. The category is typically pre-selected by the user on the host device 102. In other words, the user selects the language for audio output prior to entering data using the data entry device 202. Alternatively, the user may select the language category following the input of data utilizing the data entry device 202.

The audio output engine 308 configures the audio signal for output and outputs the audio signal, as discussed herein. The audio signal may be output via a speaker coupled to the host device 102. Alternatively, the data entry device 202 may include a speaker (not shown) for outputting the audio signal.

Optionally, the data can also be forwarded to a data display unit (not shown) associated with the host device 102. The data display unit displays the symbol(s) that corresponds to the data input. The symbol(s) is then output on a display unit (not shown) associated with the host device 102. The symbol may also be output to a display unit associated with the data entry device 202, such as a screen on a remote control, as discussed herein.

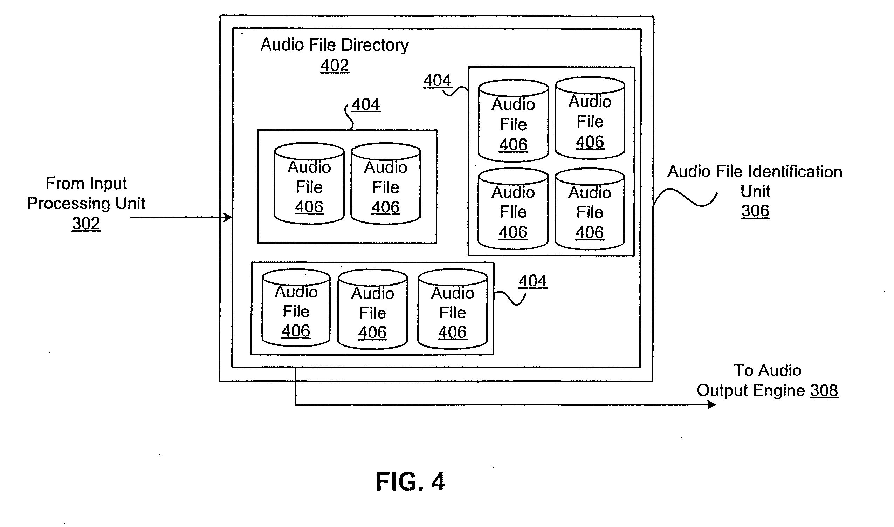

Referring now to FIG. 4, an exemplary architecture of the audio file identification unit 306 is shown. An audio file directory 402 is associated with the audio file identification unit 306 and includes one or more databases 404 that correlate to one or more languages. For instance, the audio file directory 402 may include databases 404 correlating to English, Spanish, Russian, etc. Each database 404 includes one or more audio files 406. The database 404 that includes an audio file 406 correlating to the language selected by the user is accessed in order to obtain the correct audio data. For instance, as discussed herein, the data may belong to the Spanish category and the corresponding Spanish audio file 406 is thus selected for output from the Spanish database 404. In other words, the audio file identification unit 306 accesses the audio file directory 402 in order to determine which audio file 406 from a plurality of audio files 406 organized according to language databases 404 matches the data and the selected language. The audio file 406 that matches the data and the selected language is then forwarded to the audio output engine 308.

In one embodiment, the language is predetermined and the audio confirmation confirms data entered via the data entry device 202 in the predetermined language. In other words, in this embodiment, the user does not select the language for output.

As discussed herein, the audio output engine 308 creates a signal for outputting the audio information stored in the audio file 406. The audio file 406 stores digitized audio information, which is configured for output. In other words, the audio output engine 308 converts the digitized audio information from the audio file 406 into an analog signal, which is then output. As discussed herein, the audio signal can be output via one or more speakers associated with the data entry device 202 and/or the host device 102. The audio output engine 308 may also be responsible for forwarding audio file 406 data to other appropriate playback devices for providing audio confirmation.

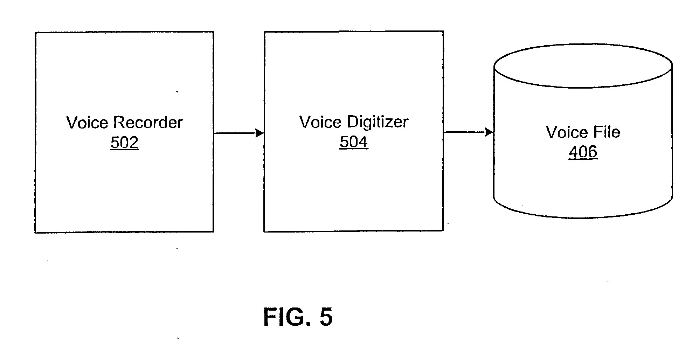

Referring now to FIG. 5, an exemplary architecture for creating an audio file 406 is shown. Initially, a voice recorder 502 records audio signals that match potential data inputs. For instance, audio signals representing numbers from 1 to 100 in English, German, French, etc. may be recorded. As another example, audio signals representing every letter of the English alphabet, Spanish alphabet, etc. may be recorded, as well as words and/or phrases from various languages, and so on.

The recorded audio signal is then forwarded to a voice digitizer 504 for converting an analog audio signal into a digital audio signal. Once the audio signal has been digitized, it is stored in the audio file 406. Each audio file 406 typically includes the audio information corresponding to a particular button, key, etc. on the data entry device 202. Accordingly, the host device 102 (FIG. 1) and audio confirmation engine 104 (FIG. 1) include multiple audio files 406. As discussed herein, the audio files 406 may be organized into an audio file directory 402 (FIG. 4). The audio file identification unit 306 (FIG. 3) determines which audio file 406 represents the data input by the user according to the language category selected by the user via the host device 102.

The audio file directory 402 and audio files 406 may be stored on the host device 102. Alternatively, the audio file directory 402 may be stored on another device and accessible by the host device 102 via a network, for example. Any device for storing the audio file directory 402 is within the scope of the present invention.

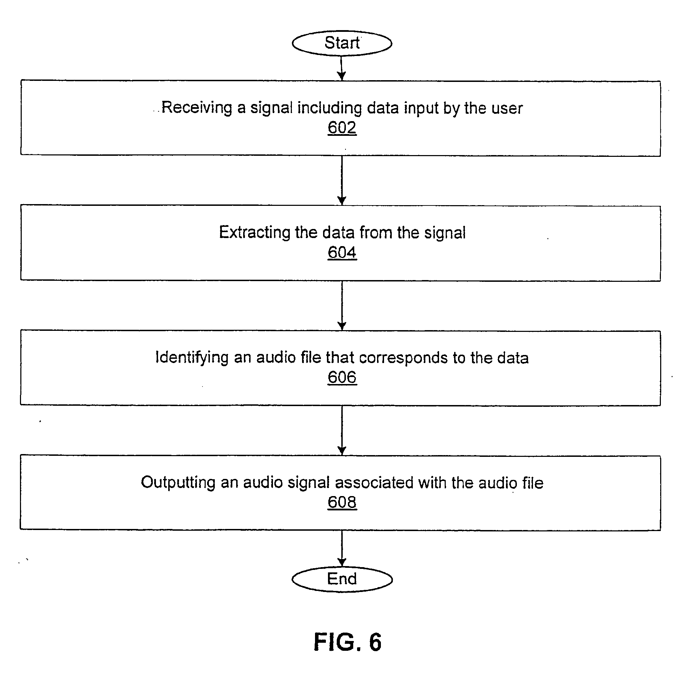

Referring now to FIG. 6, a flowchart of a process for providing audio confirmation of data entered by a user in accordance with an embodiment of the present invention is shown. At step 602, a signal including data input by the user is received from a data entry device 202 (FIG. 2). As discussed herein, the signal may be an infrared signal, etc.

At step 604, the data is extracted from the data signal. Extracting the data from the data signal includes decoding the data signal in order to reveal the data input by the user. At step 606, an audio file 406 (FIG. 4) corresponding to the data is identified. As discussed herein, the audio file 406 may be selected based on both the data input by the user as well as the category chosen by the user for audio output, such as English, German, and so on.

At step 608, an audio signal associated with the audio file is output to the user. As discussed herein, the data included in the audio file 406 is digitized. Accordingly, the digital audio signal in the audio file 406 is converted to an analog signal for output. The audio signal may be output utilizing speakers associated with the data entry device 202 and/or the host device 102, as discussed herein.

The above description is illustrative and not restrictive. Many variations of the invention will become apparent to those of skill in the art upon review of this disclosure. The scope of the invention should, therefore; be determined not with reference to the above description, but instead should be determined with reference to the appended claims along with their full scope of equivalents.

## Claims

1. A method for providing audio confirmation of data entered by a user, comprising:
receiving a signal including data input by the user;
extracting the data from the signal;
identifying an audio file that corresponds to the data; and
outputting an audio signal associated with the audio file.

2. The method of claim 1, further comprising selecting a language to associate with the data.

3. The method of claim 2, further comprising identifying the audio file that corresponds to the data according to the language selected by the user.

4. The method of any of the claims 1 to 3, wherein outputting the audio signal is activated by a switch.

5. The method of any of the claims 1 to 4, wherein outputting the audio signal is performed via a speaker.

6. The method of any of the claims 1 to 5, wherein the signal is received from a wireless data entry.

7. The method of any of the claims 1 to 5, wherein the signal is received from a wired data entry device.

8. The method of claim 7, wherein the wired data entry device includes a touchpad controller.

9. A system for providing audio confirmation, comprising:
a data entry device for receiving data from a user and for transmitting a signal including the data input by the user to a host device;
an audio confirmation engine associated with the host device for extracting the data from the signal;
an audio file identification unit associated with the audio confirmation engine for identifying an audio file that corresponds to the data; and
an audio output unit for generating an audio signal for outputting utilizing the audio file.

10. The system of claim 9, wherein the signal transmitted from the data entry device is an infrared signal.

11. The system of claim 9, wherein the signal from the data entry device is a radio frequency signal.

12. The system of any of the claims 9 to 11, wherein the audio signal is output via a speaker associated with at least one of the data entry device and the host device.

13. The system of any of the claims 9 to 12, further comprising databases for storing the audio files.

14. The system of claim 13, further comprising an audio file directory for organizing the databases.

15. The system of claim 14, wherein the databases are organized according to the language associated with the audio files the databases store.

16. The system of any of the claims 9 to 15, further comprising a language selection unit associated with the host device for allowing the user to select the language for audio signal output.

17. The system of any of the claims 9 to 16, further comprising a switch associated with the data entry device for activating and deactivating the audio signal output.

18. The system of any of the claims 9 to 16, further comprising a switch associated with the host device for activating and deactivating the audio signal output.

19. The system of any of the claims 9 to 18, wherein the data entry device is a wireless data entry device.

20. The system of any of the claims 9 to 18, wherein the data entry device is a wired remote control.

21. The system of claim 20, wherein the wired remote control includes a touch key pad controller.

22. An apparatus for providing audio confirmation, comprising:
means for receiving a signal including data input by a user;
means for extracting the data from the signal;
means for identifying an audio file that corresponds to the data; and
means for outputting an audio signal associated with the audio file.

23. A computer-readable medium comprising instructions for providing audio confirmation by performing the steps of:
receiving a signal including data input by a user;
extracting the data from the signal;
identifying an audio file that corresponds to the data; and
outputting an audio signal associated with the audio file.

24. A system for providing audio confirmation of data input, comprising:
a host device for receiving a signal from a data entry device;
an audio confirmation engine associated with the host device for extracting data from the signal;
an audio file identification unit associated with the audio confirmation engine for identifying an audio file that corresponds to the data; and
an audio output unit for generating an audio signal for outputting utilizing the audio file.
